# EUROPEAN PATENT APPLICATION

(11) **EP 3 986 014 A1**
(43) Date of publication of application: **20.04.2022**
(21) Application number: 19933187.7
(22) Date of filing: 14.06.2019
(51) Int. Cl.: H04W 24/08

(54) **TERMINAL**

(71) Applicant: NTT DOCOMO, INC., Chiyoda-Ku Tokyo 100-6150 (JP)
(72) Inventor: FUJIMURA, Naoki, Tokyo 100-6150 (JP); TAKADA, Takuma, Tokyo 100-6150 (JP)
(74) Representative: Hoffmann Eitle
(86) International application number: PCT/JP2019/023710
(87) International publication number: WO 2020/250433

(57) **Abstract**

A terminal includes a reception unit that receives, from a base station, a configuration related to at least one of measurement and reporting, a control unit that performs the measurement based on the configuration related to the at least one of the measurement and the reporting, and a transmission unit that transmits a measurement report to the base station based on the result of the performed measurement. The control unit limits a period related to the measurement or changes the number of times an operation related to the measurement is performed based on whether the terminal is in a specific environment.

## Description

### TECHNICAL FIELD

The present invention relates to a terminal for a radio communication system.

### BACKGROUND ART

In New Radio (NR) (also referred to as "5G"), which is a successor to Long Term Evolution (LTE), technologies that satisfy, for example, the following requirements are being discussed: providing greater network capacity, higher data transmission speeds, reduced latency, simultaneous connections of more terminals, lower cost, and improved power efficiency (see, for example, Non-Patent Document 1).

In Radio Resource Management (RRM) in an NR radio communication system, for example, a reference signal period of a measurement target and a delay allowed to complete a measurement operation depending on the number of samples necessary for the measurement are defined as requirements for a terminal measurement, Radio Link Monitoring (RLM), and beam quality measurement and reporting. The measurement result is used, for example, to determine whether to perform handover or to determine whether a link is in-sync (IS) or out-of-sync (OOS) in RLM (see, for example, Non-Patent Document 2).

### [RELATED-ART DOCUMENTS]

### [Non-Patent Documents]

[Non-Patent Document 1] 3GPP TS 38.300 V15.5.0 (2019-03)
[Non-Patent Document 2] 3GPP TS 38.133 V15.5.0 (2019-03)

### DISCLOSURE OF INVENTION

### PROBLEMS TO BE SOLVED BY THE INVENTION

In an NR radio communication system, a terminal needs to perform measurement such that requirements specified in the RRM specification for NR are satisfied. Here, the RRM specification for NR is highly flexible. For example, the period of an SS/PBCH block (SSB), a channel state information reference signal (CSI-RS), or an SSB-based measurement timing configuration (SMTC) is changeable. Therefore, depending on configurations related to RRM, there is a possibility that sufficient measurement cannot be performed particularly in a high-speed mobile environment (for example, high speed train (HST)).

The present invention is made in view of the above-described problem, and an object of the present invention is to enable a terminal in a radio communication system to perform measurement according to an environment.

### MEANS FOR SOLVING THE PROBLEMS

This disclosure provides a terminal including a reception unit that receives, from a base station, a configuration related to at least one of measurement and reporting, a control unit that performs the measurement based on the configuration related to the at least one of the measurement and the reporting, and a transmission unit that transmits a measurement report to the base station based on the result of the performed measurement. The control unit limits a period related to the measurement or changes the number of times an operation related to the measurement is performed based on whether the terminal is in a specific environment.

### ADVANTAGEOUS EFFECT OF THE INVENTION

An aspect of this disclosure enables a terminal in a radio communication system to perform measurement according to an environment.

### BRIEF DESCRIPTION OF THE DRAWINGS

FIG. 1 is a drawing illustrating a radio communication system according to an embodiment of the present invention;
FIG. 2 is a drawing illustrating a radio communication system according to an embodiment of the present invention;
FIG. 3 is a sequence chart illustrating an example of a process for reporting a UE capability;
FIG. 4 is a sequence chart illustrating an example of a measurement process;
FIG. 5 is a flowchart illustrating an example (1) of a measurement process according to an embodiment of the present invention;
FIG. 6 is a flowchart illustrating an example (2) of a measurement process according to an embodiment of the present invention;
FIG. 7 is a flowchart illustrating an example (1) of a process of limiting a period according to an embodiment of the present invention;
FIG. 8 is a flowchart illustrating an example (2) of a process of limiting a period according to an embodiment of the present invention;
FIG. 9 is a drawing illustrating an example (1) of limiting periods according to an embodiment of the present invention;
FIG. 10 is a drawing illustrating an example (2) of limiting periods according to an embodiment of the present invention;
FIG. 11 is a drawing illustrating an example (3) of limiting periods according to an embodiment of the present invention;
FIG. 12 is a drawing illustrating an example (4) of limiting periods according to an embodiment of the present invention;
FIG. 13 is a drawing illustrating an example of a functional configuration of a base station 10 according to an embodiment of the present invention;
FIG. 14 is a drawing illustrating an example of a functional configuration of a terminal 20 according to an embodiment of the present invention; and
FIG. 15 is a drawing illustrating an example of a hardware configuration of the base station 10 or the terminal 20 according to an embodiment of the present invention.

### DESCRIPTION OF EMBODIMENTS

Embodiments of the present invention are described below with reference to the accompanying drawings. Embodiments described below are examples, and the present invention is not limited to the described embodiments.

In operations of a radio communication system according to an embodiment of the present invention, related-art technologies may also be used as necessary. The related-art technologies are, for example, but are not limited to, current LTE technologies. Unless otherwise mentioned, the term "LTE" used in the present application has a broad meaning that encompasses LTE-Advanced and systems subsequent to LTE-Advanced (e.g., NR) .

In the embodiments of the present invention described below, terms in the current LTE such as a synchronization signal (SS), a primary SS (PSS), a secondary SS (SSS), a physical broadcast channel (PBCH), and a physical random access channel (PRACH) are used. This is for descriptive purposes, and the same signals and functions may be referred to by other names. Also, in NR, NR-SS, NR-PSS, NR-SSS, NR-PBCH, and NR-PRACH correspond to the above terms. However, even a signal used in NR may not necessarily be prefixed by "NR-".

Also, in the embodiments of the present invention, the duplexing scheme may be time division duplexing (TDD), frequency division duplexing (FDD), or any other scheme (for example, a flexible duplex scheme).

In the embodiments of the present invention, to "configure" radio parameters may indicate that radio parameters are pre-configured using predetermined values, or radio parameters are set to values transmitted from a base station 10 or a terminal 20.

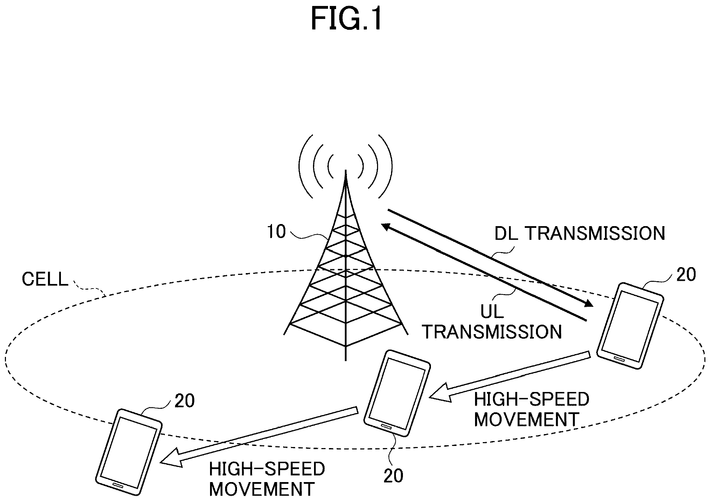

FIG. 1 is a drawing illustrating a radio communication system according to an embodiment of the present invention. As illustrated in FIG. 1, the radio communication system of an embodiment of the present invention includes a base station 10 and a terminal 20. Although one base station 10 and one terminal 20 are illustrated in FIG. 1, this is just an example, and multiple base stations and multiple terminals may be provided.

The base station 10 is a communication device that provides one or more cells and performs radio communications with the terminal 20. A physical resource of a radio signal is defined in a time domain and a frequency domain. The time domain may be defined by the number of OFDM symbols, and the frequency domain may be defined by the number of subcarriers or the number of resource blocks. The base station 10 transmits synchronization signals and system information to the terminal 20. The synchronization signals are, for example, NR-PSS and NR-SSS. The system information is transmitted via, for example, NR-PBCH and is also referred to as broadcast information. As illustrated in FIG. 1, the base station 10 transmits a control signal or data via downlink (DL) to the terminal 20 and receives a control signal or data via uplink (UL) from the terminal 20. Both the base station 10 and the terminal 20 can transmit and receive signals by beam forming.

The terminal 20 is a communication device, which includes a radio communication function, such as a smartphone, a mobile phone, a tablet, a wearable terminal, or a machine-to-machine (M2M) communication module. As illustrated in FIG. 1, the terminal 20 uses various communication services provided by the radio communication system by receiving a control signal or data from the base station 10 via DL and transmitting a control signal or data to the base station 10 via UL.

An object according to an embodiment of the present invention is to improve the communication performance when the terminal 20 is in a high-speed mobile environment as illustrated in FIG. 1. The high-speed mobile environment is, for example, an environment where the terminal 20 moves at high speed in a high speed train (HST).

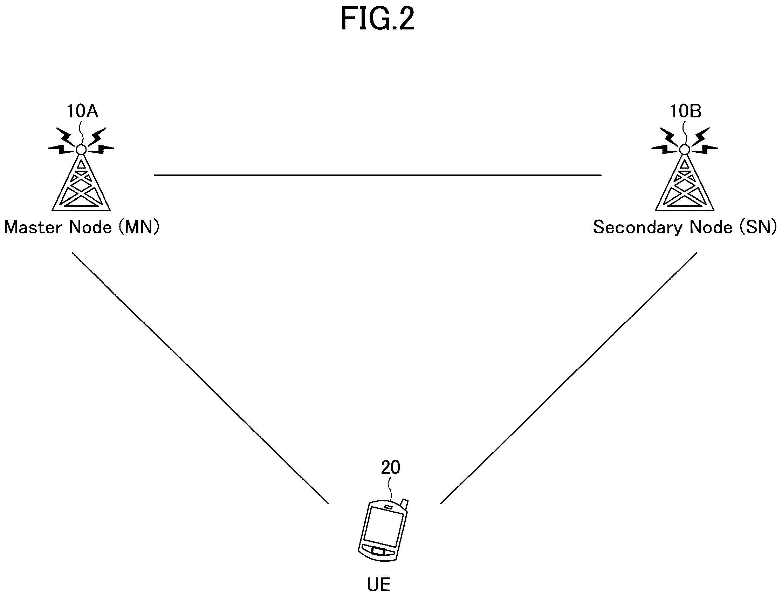

FIG. 2 is a drawing illustrating an example of the configuration of a radio communication system according to an embodiment of the present invention. FIG. 2 is a schematic diagram of a radio communication system in a Multi-RAT Dual Connectivity (MR-DC) configuration.

As illustrated in FIG. 2, the terminal 20 communicates with a base station 10A provided by an NR system and a base station 10B provided by the NR system (hereafter, when the distinction between the base station 10A and the base station 10B is not necessary, they may be referred to as "the base station(s) 10"). Also, the terminal 20 supports NR-NR dual connectivity, i.e., NR-DC, where the base station 10A serves as a master node (MN) and the base station 10B serves as a secondary node (SN). The terminal 20 can perform simultaneous transmission or simultaneous reception with the base station 10A as a master node and the base station 10B as a secondary node by simultaneously using multiple component carriers provided by the base station 10A that is the master node and the base station 10B that is the secondary node. Cells belonging to the master node may be referred to as a master cell group, and cells belonging to the secondary node may be referred to as a secondary cell group.

Also, as illustrated in FIG. 2, the terminal 20 may communicate with the base station 10A provided by an LTE system and the base station 10B provided by an NR system. Further, the terminal 20 may support LTE-NR dual connectivity, i.e., EN-DC, where the base station 10A serves as the MN and the base station 10B serves as the SN. The terminal 20 can perform simultaneous transmission or simultaneous reception with the base station 10A that is the master node and the base station 10B that is the secondary node by simultaneously using multiple component carriers provided by the base station 10A that is the master node and the base station 10B that is the secondary node.

Also, as illustrated in FIG. 2, the terminal 20 may communicate with the base station 10A provided by an NR system and the base station 10B provided by an LTE system. Further, the terminal 20 may support NR-LTE dual connectivity, i.e., NE-DC (NR-E-UTRA Dual Connectivity) where the base station 10A serves as the MN and the base station 10B serves as the SN. The terminal 20 can perform simultaneous transmission or simultaneous reception with the base station 10A that is the master node and the base station 10B that is the secondary node by simultaneously using multiple component carriers provided by the base station 10A that is the master node and the base station 10B that is the secondary node.

Also, as illustrated in FIG. 2, the terminal 20 may communicate with the base station 10A provided by an NR system and the base station 10B provided by the NR system. Further, the terminal 20 may support NR-NR dual connectivity, i.e., NR-DC, where the base station 10A serves as the MN and the base station 10B serves as the SN. The terminal 20 can perform simultaneous transmission or simultaneous reception with the base station 10A that is the master node and the base station 10B that is the secondary node by simultaneously using multiple component carriers provided by the base station 10A that is the master node and the base station 10B that is the secondary node.

Further, as illustrated in FIG. 2, the terminal 20 may communicate with the base station 10A provided by an LTE system and the base station 10B provided by the LTE system. Further, the terminal 20 may support LTE-LTE dual connectivity, i.e., LTE-DC, where the base station 10A serves as the MN and the base station 10B serves as the SN. The terminal 20 can perform simultaneous transmission or simultaneous reception with the base station 10A that is the master node and the base station 10B that is the secondary node by simultaneously using multiple component carriers provided by the base station 10A that is the master node and the base station 10B that is the secondary node.

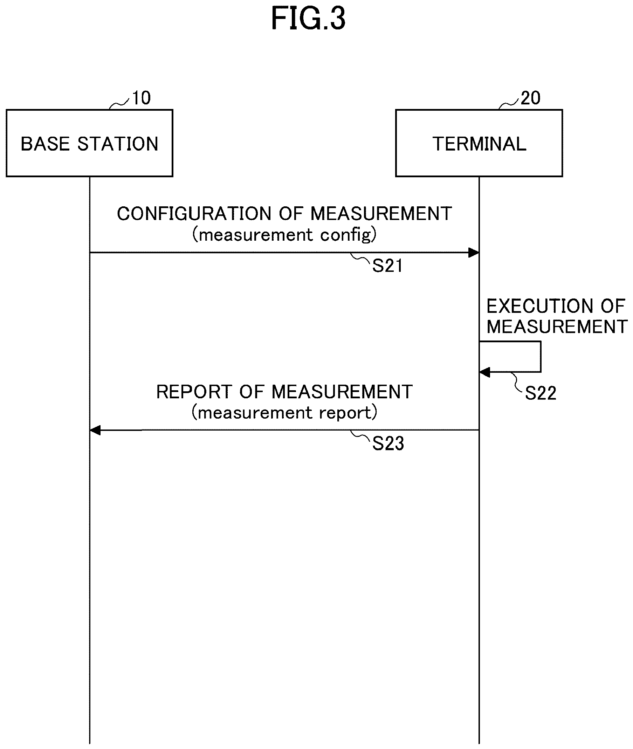

FIG. 3 is a sequence chart illustrating an example of a measurement process. At step S21, the base station 10 transmits information on measurement configurations to the terminal 20. The information on the measurement configurations includes an event. Next, at step S22, the terminal 20 performs measurement based on the received information on the measurement configurations. Next, at step S23, when a condition related to a measurement result set by the event is satisfied, the terminal 20 transmits a measurement report to the base station 10.

The measurement result may be a signal intensity (such as reference signal received power (RSRP)) or a signal quality (such as reference signal received quality (RSRQ) or signal to interference plus noise power ratio (SINR)). The measurement result may be defined in any layer. For example, the measurement result may be defined in the layer 1 or the layer 3. Also, the measurement result may correspond to a single sample or samples obtained by filtering multiple samples.

In LTE, a standard specification for HST is determined to ensure communication performance in a high-speed mobile environment. For example, the reduction of a measurement delay in an idle mode and the reduction of a measurement delay in a connected and DRX (discontinuous reception) mode are defined in the UE capability as optional functions applied only to the primary cell.

In addition, a) through d) below are being considered as operations for HST in consideration of, for example, a maximum speed of 500 km/h.
a) Cell reselection requirement for primary cell in idle mode
b) UL timing
c) Primary cell measurement requirement in DRX mode
d) Radio link monitoring (RLM)

Also, for example, e) through g) below are being considered as operations for HST in consideration of carrier aggregation.
e) Measurement requirements for deactivated secondary cells
f) Measurement requirements for secondary cells in DRX mode
g) Delay related to secondary cell activation

Here, in NR, unlike LTE, cell reference signal (CRS) is not always transmitted, and it is possible to set the transmission period of SS/PBCH block (SSB) or channel state information reference signal (CSI-RS) used for measurement or RLM and to set the SS/PBCH block measurement timing configuration (SMTC) period. Therefore, in a high-speed mobile environment such as HST, if a set transmission period of SSB or CSI-RS is long, it may not be possible to perform measurement with a desired number of samples. Also, if a set SMTC period is long, it may not be possible to perform measurement with a desired number of samples. Similarly, in performing RLM, it may not be possible to use a sufficient measurement period or a sufficient number of samples.

Also, in NR, operations related to control between different RATs in DC and beam control are specified. Therefore, in a high-speed mobile environment such as HST, it may be necessary to perform an optimal control or operation suitable for the environment. For example, if a set SSB transmission period, a set CSI-RS transmission period, or a set L1-RSRP reporting period is long, it may not be possible to perform measurement with a desired number of samples. Also, if the number of simultaneously measurable beams for a normal environment is set at the same value as that for the HST environment, a large number of beams are unnecessarily measured, and the power consumption and the terminal costs may increase.

As described above, unless NR specifications for HST are determined, it may be difficult to achieve a stable connection in a high-speed mobile environment. For this reason, appropriate terminal operations in NR for HST are defined to prevent an increase in power consumption or terminal costs, and to ensure terminal performance and stable connection under a high-speed mobile environment.

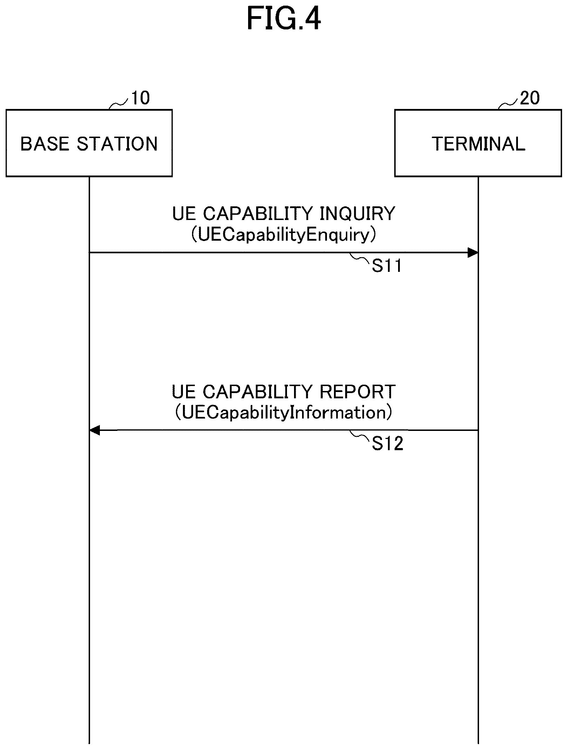

FIG. 4 is a sequence chart illustrating an example of a process for reporting a UE capability. An example of determining whether an environment is HST or whether HST is applicable is described with reference to FIG. 4.

At step S11, the base station 10 transmits a UE capability inquiry to the terminal 20. The UE capability inquiry may include information indicating a type of UE capability requested to be reported. Next, the terminal 20 transmits a UE capability report (UE capability Information) to the base station 10. For example, the terminal 20 may include information related to HST in the UE capability report. For example, the terminal 20 may include information indicating a supported moving speed (e.g., 350 km/h or 500 km/h) in the UE capability report. Also, for example, the terminal 20 may include information indicating a measurement capability in the UE capability report. The information indicating the measurement capability is, for example, a number of samples necessary to complete the measurement or a class of a satisfactory measurement accuracy.

On the other hand, the base station 10 may transmit information on HST to the terminal 20 through signaling. The information on HST may be, for example, any one of 1) through 3) below.
1) Possible scenario under network environment (e.g., HST-single frequency network (SFN), or in or out of a tunnel)
2) Station placing method under network environment (e.g., beam direction: uni-directional or bi-directional)
3) PRACH setting reported from network (e.g., PRACH detection failure requirements specified in LTE: "normal mode", "high speed mode restricted set type A", and "high speed mode restricted set type B")

Signaling of 1) through 3) may be newly defined, may be implemented by using existing signaling, or may be implemented by extending the signaling defined for LTE to suit NR.

Next, a method of setting UE operations or network configurations for HST is described. Here, it is assumed that the terminal 20 has a UE capability to support HST and can determine whether the terminal 20 is in an HST environment.

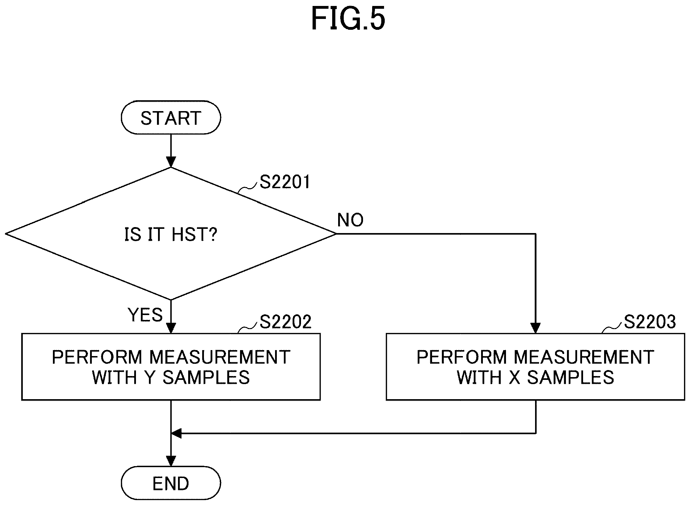

FIG. 5 is a flowchart illustrating an example (1) of a measurement process according to an embodiment of the present invention. The measurement performed at step S22 of FIG. 3 is described in detail with reference to FIG. 5. The terminal 20 may change the operation related to cell detection or measurement depending on whether the terminal 20 is in an HST environment. For example, the terminal 20 may change the number of samples used for cell detection or measurement, i.e., the number of times measurement is performed until the measurement is completed.

At step S2201, the terminal 20 determines whether the environment is HST. When the environment is HST (YES at S2201), the process proceeds to step S2202. When the environment is not HST (NO at S2201), the process proceeds to step S2203. At step S2202, the terminal 20 performs measurement with Y samples. On the other hand, at step S2203, the terminal 20 performs measurements with X samples where X is greater than Y. That is, a sample number X is greater than a sample number Y. As described above, in an HST environment, the terminal 20 may complete the measurement with a smaller number of samples than in a non-HST environment.

Also, in the HST environment, the terminal 20 may use a lower minimum value of the measurement delay than that in the non-HST environment or may not use the minimum value. Specifying the minimum value of the measurement delay makes it possible to prevent the terminal 20 from decreasing the measurement delay more than necessary.

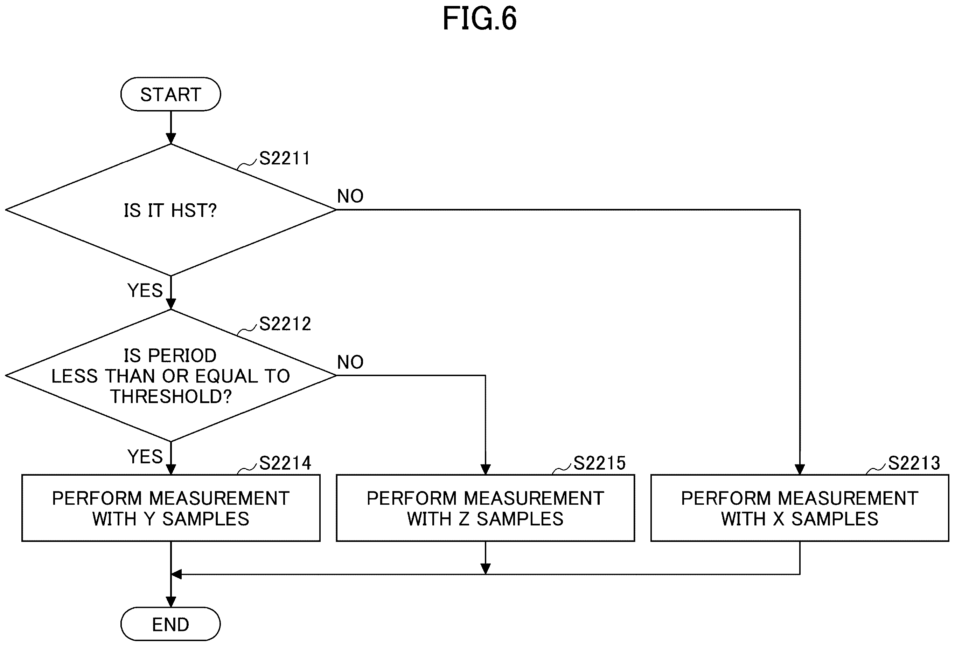

FIG. 6 is a flowchart illustrating an example (2) of a measurement process according to an embodiment of the present invention. The measurement performed at step S22 of FIG. 3 is described in detail with reference to FIG. 6. The terminal 20 may change the operation related to cell detection or measurement depending on whether the terminal 20 is in an HST environment. For example, when the terminal 20 is an HST environment, the SSB transmission period, the CSI-RS transmission period, the SMTC period, the measurement gap (MG) period, the secondary-cell measurement period, or the DRX cycle, which is settable in the terminal 20 by the base station 10, may be limited. Alternatively, the terminal 20 may change the measurement period based on a set period. Also, the terminal 20 may change its operation according to the set period. In the descriptions below, the SSB transmission period, the CSI-RS transmission period, the SMTC period, the MG period, or the secondary-cell measurement period may correspond to the period of a measurement operation performed by the terminal 20 based on the period determined by the base station 10. Also, for example, limiting the settable period may be regarded as limiting the period of the measurement operation performed by the terminal 20. Further, the DRX period may correspond to the period of a DRX operation performed by the terminal 20 based on the DRX period determined by the base station 10, and limiting the settable DRX period may be regarded as limiting the period of the DRX operation performed by the terminal 20.

At step S2211, the terminal 20 determines whether the environment is HST. When the environment is HST (YES at S2211), the process proceeds to step S2212. When the environment is not HST (NO at S2211), the process proceeds to step S2213. At step S2213, the terminal 20 performs measurement with X samples. On the other hand, at step S2212, the terminal 20 determines whether the period is less than or equal to a threshold. If the period is less than or equal to the threshold (YES at S2212), the process proceeds to step S2214. If the period is greater than the threshold (NO at S2212), the process proceeds to step S2215. At step S2214, the terminal 20 performs measurement with Y samples. On the other hand, at step S2215, the terminal 20 performs measurement with Z samples.

Regarding the X samples, the Y samples, and the Z samples, "sample number X > sample number Y > sample number Z" is satisfied. The threshold is, for example, 40 ms, 80 ms, or 640 ms. The period is, for example, one or more of the SSB transmission period, the CSI-RS transmission period, the SMTC period, the MG period, the secondary-cell measurement period, and the DRX period. As described above, in the HST environment, the terminal 20 may complete measurement using different numbers of measurement samples depending on the periods. The same threshold or different thresholds may be used for the SSB transmission period, the CSI-RS transmission period, the SMTC period, the MG period, and the secondary-cell measurement period.

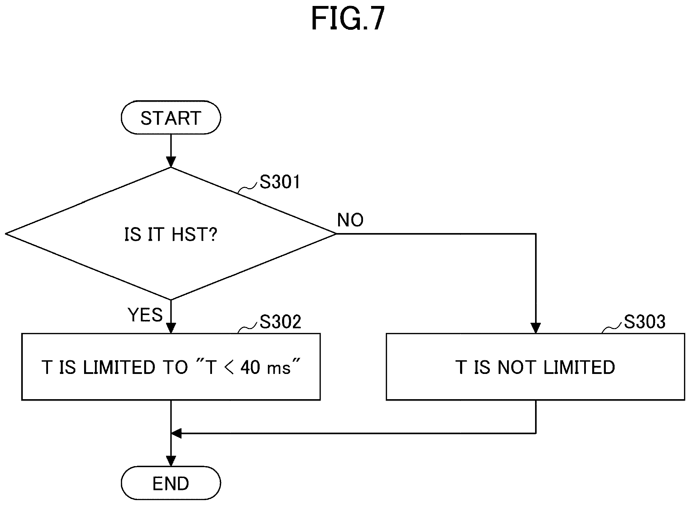

FIG. 7 is a flowchart illustrating an example (1) of a process of limiting a period according to an embodiment of the present invention. The terminal 20 may change the operation related to cell detection or measurement based on whether the terminal 20 is in the HST environment. For example, the terminal 20 may limit the SSB transmission period, the CSI-RS transmission period, the SMTC period, the MG period, the secondary-cell measurement period, or the DRX period, which is settable, and may change the operation according to the period.

At step S301, the terminal 20 determines whether the environment is HST. When the environment is HST (YES at S301), the process proceeds to step S302. When the environment is not HST (NO at S301), the process proceeds to step S303. At step S302, the terminal 20 limits a period T to a value less than 40 ms. On the other hand, at step S303, the terminal 20 does not limit the period T. The period T may be any one of the SSB transmission period, the CSI-RS transmission period, the SMTC period, the MG period, the secondary-cell measurement period, and the DRX period.

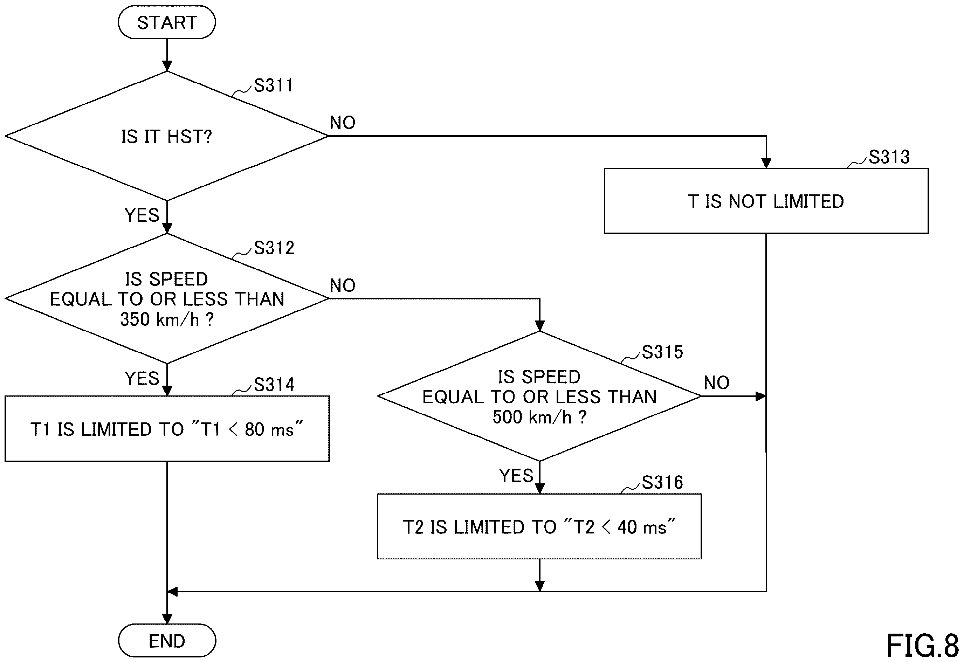

FIG. 8 is a flowchart illustrating an example (2) of a process of limiting a period according to an embodiment of the present invention. FIG. 8 illustrates a process where multiple thresholds are used to limit the period in FIG. 7. Each of a period T1 and a period T2 in FIG. 8 may be any one of the SSB transmission period, the CSI-RS transmission period, the SMTC period, the MG period, the secondary-cell measurement period, and the DRX period. The period T1 and the period T2 may be the periods of the same type or different types.

At step S311, the terminal 20 determines whether the environment is HST. When the environment is HST (YES at S311), the process proceeds to step S312. When the environment is not HST (NO at S311), the process proceeds to step S313. At step S313, the terminal 20 does not limit the periods T. On the other hand, at step S312, the terminal 20 determines whether the speed is less than or equal to 350 km/h. When the speed is less than or equal to 350 km/h (YES at S312), the process proceeds to step S314. When the speed is greater than 350 km/h (NO at S312), the process proceeds to step S315. At step S314, the terminal 20 limits the period T1 to a value less than 80 ms. On the other hand, at step S315, the terminal 20 determines whether the speed is less than or equal to 500 km/h. When the speed is less than or equal to 500 km/h (YES at S315), the process proceeds to step S316. When the speed is greater than 500 km/h (NO at S315), the process ends. At step S316, the terminal 20 limits the period T2 to a value less than 40 ms. Here, that the speed is less than or equal to 350 km/h or 500 km/h may indicate that the actual moving speed of the terminal 20 is less than or equal to this speed, or may indicate that the terminal 20 can achieve required performance at a speed less than or equal to this speed.

As another example, in the HST environment, the terminal 20 may change a measurement accuracy that needs to be satisfied in measurement in a predetermined duration or may limit a condition under which a specified measurement accuracy is applicable. In changing the measurement accuracy, the acceptable range of the measurement error of each or any one of RSRP, RSRQ, and SINR may be made greater than that in a non-HST environment. That is, the absolute value of a tolerable measurement error may be set at a large value. In limiting the condition under which a specified measurement accuracy is applicable, for example, the lower limit of SNR at which the specified measurement accuracy is applicable may be set at a value (e.g., 0 dB) that is greater than the value (e.g., -6 dB) in a non-HST environment.

As another example, in the HST environment, the terminal 20 may set the number of carriers, the number of cells, or the number of beams measured simultaneously at a value that is smaller than the value in the non-HST environment. The smaller value may vary depending on or may be the same regardless of an applied frequency band; or may vary depending on or may be the same regardless of whether the measurement is intra-frequency measurement or inter-frequency measurement.

As another example, in the HST environment, the terminal 20 may perform measurement using an additional reference signal. Examples of the additional reference signal include CSI-RS, DMRS for PBCH, SSB not specified in SMTC, and a newly-specified reference signal that is used in the HST environment and suitable for a high-speed mobile environment.

Also, the terminal 20 may change operations related to RLM depending on whether the terminal 20 is in the HST environment. For example, the terminal 20 may change the number of samples used for measurement in RLM or a measurement period for determining IS and OOS in RLM. For example, in the HST environment, the terminal 20 may complete the measurement with a small number of samples or in a short measurement period. Also, in the HST environment, the terminal 20 may set the minimum value of the number of samples or the measurement period at a value that is less than the value in the non-HST environment or may not specify the minimum value.

As another example, in the HST environment, the terminal 20 may limit an SSB transmission period or a CSI-RS transmission period used for measurement in RLM, or may change its operation depending on the SSB transmission period or the CSI-RS transmission period used for measurement in RLM. For example, the terminal 20 may be configured to be able to set only an SSB transmission period or a CSI-RS transmission period that is shorter than a threshold. Also, for example, the terminal 20 may perform measurement using a threshold for limiting the SSB transmission period or the CSI-RS transmission period and a number of samples that varies depending on the set SSB transmission period or the set CSI-RS transmission period. The threshold for limiting the period may be comprised of a single threshold or multiple different thresholds.

As another example, in the HST environment, the terminal 20 may change parameters of hypothetical PDCCH. For example, in the HST environment, a combination of new parameters of the hypothetical PDCCH may be defined, or some of the existing parameters (e.g., an aggregation level, a resource element power level (power boosting), a bandwidth, and a subcarrier spacing (SCS)) of the hypothetical PDCCH may be changed to differ from those in the non-HST environment. Both or either one of the parameters of the hypothetical PDCCH for IS and the parameters of the hypothetical PDCCH for OOS may be changed.

As another example, in the HST environment, the terminal 20 may change a threshold (BLER pair) used to determine IS or OOS in RLM. For example, in the HST environment, the terminal 20 may set the BLER pair at values greater or less than those in the non-HST environment. For example, the terminal 20 may set the BLER pair at smaller values when the cell radius is small, or may set the BLER pair to larger values when the cell radius is large. For example, when changing the BLER pair to larger values from an IS BLER of 2% and an OOS BLER of 10%, the terminal 20 may set the IS BLER at 5% and the OOS BLER at 20%. For example, when changing the BLER pair to smaller values from an IS BLER of 2% and an OOS BLER of 10%, the terminal 20 may set the IS BLER at 1% and the OOS BLER at 5%. Alternatively, among the values in the BLER pair, the terminal 20 may change only the value for IS or the value for OOS. To report the BLER pair in the HST environment, already-defined signaling, newly-defined signaling, or a unique value described in the specification may be used.

As another example, in the HST environment, the terminal 20 may change the number of beams that need to be simultaneously measured. For example, in the HST environment, the terminal 20 may set the number of beams that need to be simultaneously measured at a value that is less than the value in the non-HST environment.

Also, the terminal 20 may change an operation related to beam control depending on whether the terminal 20 is in the HST environment. For example, in the HST environment, the terminal 20 may change the number of samples used for beam failure detection (BFD) or candidate beam detection (CBD). In the HST environment, the terminal 20 may complete the measurement for BFD or CBD with a number of samples that is smaller than that used in the non-HST environment. The terminal 20 may set the minimum measurement period for BFD or CBD at a value smaller than that in the non-HST environment or may not specify the minimum measurement period.

As another example, in the HST environment, the terminal 20 may limit an SSB transmission period, a CSI-RS transmission period, or an L1-RSRP reporting period used for the measurement to report BFD, CBD, or L1-RSRP; or may change its operation depending on the SSB transmission period, the CSI-RS transmission period, or the L1-RSRP reporting period. For example, the terminal 20 may be configured to be able to set only an SSB transmission period, a CSI-RS transmission period, or an L1-RSRP reporting period that is shorter than a given threshold. Also, for example, the threshold for limiting the period of a reference signal set for BFD, CBD, or L1-RSRP may be comprised of a single threshold or multiple different thresholds. The measurement may be performed using a number of samples that varies depending on a threshold for limiting the period and the period of a reference signal set for BFD, CBD, or L1-RSRP. The threshold for limiting the period may be comprised of a single threshold or multiple different thresholds.

As another example, in the HST environment, the terminal 20 may change parameters for BFD hypothetical PDCCH in BFD. For example, in the HST environment, a combination of new parameters for hypothetical PDCCH in BFD may be specified; or some of existing parameters (e.g., an aggregation level, a resource element power level (power boosting), a bandwidth, and subcarrier spacing (SCS)) for hypothetical PDCCH in BFD may be changed from those used in the non-HST environment.

As another example, in the HST environment, the terminal 20 may change a threshold (BLER value) used to determine a beam failure (BF). For example, in the HST environment, the terminal 20 may make the BLER value smaller than or larger than that used in the non-HST environment. For example, the terminal 20 may decrease the BLER value when the cell radius is small or increase the BLER value when the cell radius is large. For example, when the BLER value is changed to a larger value from a state where BF is determined based on a BLER of 10%, the terminal 20 may determine BF based on a BLER of 20%. For example, when the BLER value is changed to a smaller value from a state where BF is determined based on a BLER of 10%, the terminal 20 may determine BF based on a BLER of 5%. The BLER value used to determine BF may be the same as or different from a threshold used to determine OOS in RLM. To report the BLER value in the HST environment, already-defined signaling, newly-defined signaling, or a unique value described in the specification may be used.

As another example, in the HST environment, when changing a TCI state of PDCCH or PDSCH, a delay time until the terminal 20 receives PDCCH or PDSCH via a beam corresponding to the changed TCI state may be changed. For example, in the HST environment, the terminal 20 may set a delay time taken to receive PDCCH or PDSCH via a beam corresponding to the changed TCI state at a value greater than that used in the non-HST environment. For example, the delay time may be increased by X ms or Y samples (e.g., Y SSB occasions). Increasing the delay time taken by the terminal 20 to receive PDCCH or PDSCH with a beam corresponding to the changed TCI state makes it easier for the terminal 20 in the HST environment to synchronize with the beam.

On the other hand, from a network point of view, the delay time taken by the terminal 20 to receive PDCCH or PDSCH via the beam corresponding to the changed TCI state may be decreased. Decreasing the delay time taken by the terminal 20 to receive PDCCH or PDSCH via the beam corresponding to the changed TCI state makes it possible to request the terminal 20 to synchronize with the beam in the HST environment.

Also, the terminal 20 may change the measurement operation in the DRX mode depending on whether the terminal 20 is in an HST environment. For example, in the HST environment, the terminal 20 may limit a settable DRX period or change its operation according to the DRX period. For example, the terminal 20 may be configured to be able to set only a DRX period shorter than a given threshold. Also, for example, the threshold for limiting the DRX period may comprise a single threshold or multiple different thresholds. The terminal 20 may perform measurement using a number of samples that varies depending on the set DRX period.

Below, a method of setting UE operations for HST for different RATs in DC is described.

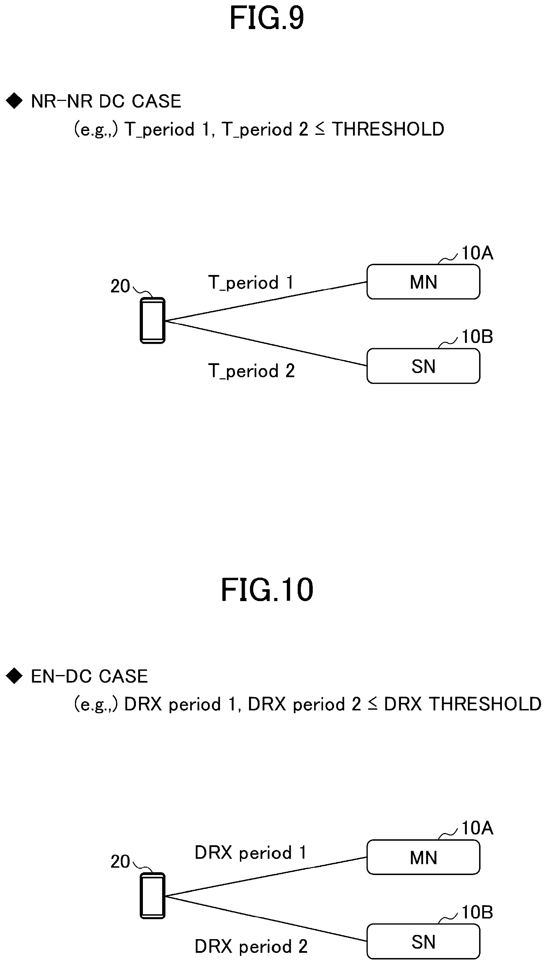

FIG. 9 is a drawing illustrating an example (1) of limiting periods according to an embodiment of the present invention. For the RATs in DC as illustrated in FIG. 2, periods or parameters may be limited by using common configurations, or common limitations may be applied to periods or parameters.

The base station 10 or the terminal 20 may set each of configurations a) through d) below at the same value for both of the RATs.
a) One of or a combination of periods of SSB, CSI-RS, SMTC, and MG used for cell detection/measurement
b) One of or a combination of a period of SSB or CSI-RS used for RLM, hypothetical PDCCH parameters, and a BLER pair
c) One of or a combination of a period of SSB or CSI-RS used for BFD, CBD, or L1-RSRP reporting, hypothetical PDCCH parameters, a BLER value, and an L1-RSRP reporting period
d) DRX setting period

The terminal 20 may use the same limiting threshold for both of the RATs for each of the above configurations a) through d) (e.g., for each period or each parameter).

For example, as illustrated in FIG. 9, when the terminal 20 is communicating with an MN 10A and an SN 10B according to NR-DC, the terminal 20 may set a period T_period1 and a period T_period2 that are less than or equal to a common threshold. T_period1 is applied to the NR communication between the terminal 20 and the MN 10A, and T_period2 is applied to the NR communication between the terminal 20 and the SN 10B. Each of the period T_period1 and the period T_period2 is, for example, a period of SSB, CSI-RS, SMTC, MG, or DRX.

FIG. 10 is a drawing illustrating an example (2) of limiting periods according to an embodiment of the present invention. For example, as illustrated in FIG. 10, when the terminal 20 is communicating with the MN 10A and the SN 10B according to EN-DC, the terminal 20 may set a period DRX_period1 and a period DRX_period2 that are less than or equal to a common threshold. DRX_period1 is applied to the LTE communication between the terminal 20 and the MN 10A, and T_period2 is applied to the NR communication between the terminal 20 and the SN 10B. Each of the period T_period1 and the period T_period2 is, for example, a period of SSB, CSI-RS, SMTC, MG, or DRX.

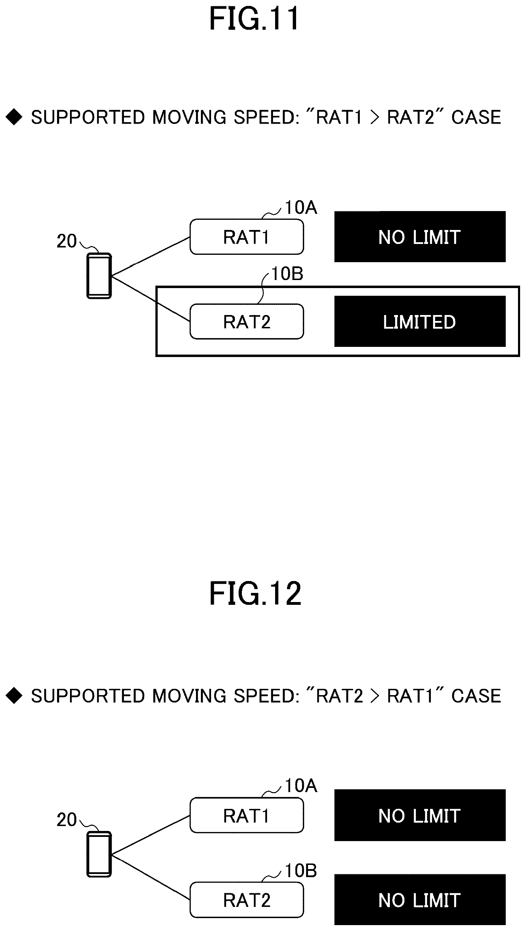

FIG. 11 is a drawing illustrating an example (3) of limiting periods according to an embodiment of the present invention. A setting or a rule suitable for a specific RAT may be applied to RATs in DC as illustrated in FIG. 2. The specific RAT may be a RAT of a master node or a RAT of a secondary node, may be a RAT unique to LTE or NR, or may be a RAT that supports a lower moving speed of the terminal 20.

In DC, applying a configuration or rule to a specific RAT may indicate, for example, not applying any setting or rule to both of the RATs, applying a configuration or rule only to the specific RAT, or applying a configuration or rule only to a RAT other than the specific RAT and not applying any setting or rule to the specific RAT. The setting or rule may be, for example, a limitation applied a period or a parameter described with reference to FIG. 9.

For example, as illustrated in FIG. 11, when the moving speed of the terminal 20 supported by RAT1 is greater than that supported by RAT2, and the terminal 20 is performing DC communications according to RAT1 and RAT2, a limitation may be applied to a period or a parameter related to RAT2. In FIG. 11, the specific RAT is RAT1, which supports a higher moving speed of the terminal 20.

FIG. 12 is a drawing illustrating an example (4) of limiting a period according to an embodiment of the present invention. For example, as illustrated in FIG. 12, when the moving speed of the terminal 20 supported by RAT2 is greater than that supported by RAT1, and the terminal 20 is performing DC communications according to RAT1 and RAT2, no limitation may be applied to a period or a parameter of each of RAT1 and RAT2. In FIG. 12, the specific RAT is RAT1, which supports a lower moving speed of the terminal 20.

The operations for HST in the above embodiments may also be defined as operations for URLLC or a power saving mode. That is, the HST environment in the above embodiments may also be considered as a requirement for URLLC or a requirement for the power saving mode. The operations for HST in the above embodiments may be applied to any network architecture such as standalone (SA) and MR-DC, or different operations for HST may be applied to respective network architectures. The operations for HST in the above embodiments may be defined regardless of whether CA is applied, or different operations for HST may be applied to respective CCs (for example, to a primary cell and a secondary cell).

The above embodiments enable the terminal 20 to perform measurement suitable for the HST environment and improve its performance. Also, the terminal 20 can change UE operations or network configurations to suit the HST environment. Further, the terminal 20 can change UE operations for RATs in DC to suit the HST environment.

That is, in the radio communication system, the terminal can perform measurement according to an environment.

### (CONFIGURATIONS OF DEVICES)

Next, examples of functional configurations of the base station 10 and the terminal 20, which perform the above-describe processes and operations, are described. The base station 10 and the terminal 20 include functions for implementing the above-described embodiments. However, each of the base station 10 and the terminal 20 may include only some of the functions in the embodiments.

### <BASE STATION 10>

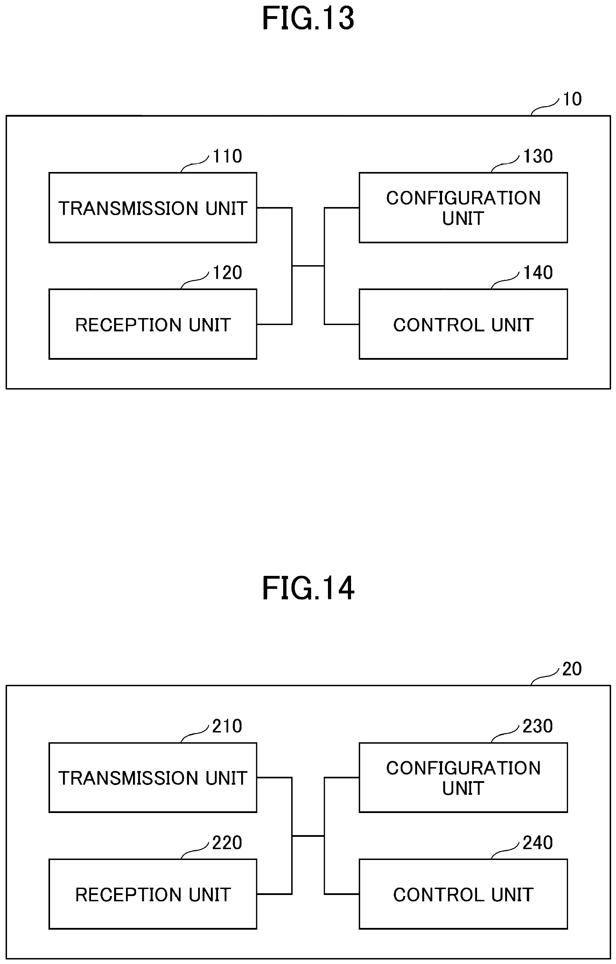

FIG. 13 is a drawing illustrating an example of a functional configuration of the base station 10. As illustrated in FIG. 13, the base station 10 includes a transmission unit 110, a reception unit 120, a configuration unit 130, and a control unit 140. The functional configuration illustrated in FIG. 13 is just an example. As long as operations related to the embodiments of the present invention can be performed, the categorization and the names of the functional components may be freely changed.

The transmission unit 110 includes a function of generating a signal to be transmitted to the terminal 20 and to wirelessly transmit the signal. The reception unit 120 includes a function to receive various types of signals transmitted from the terminal 20 and to obtain, for example, information on upper layers from the received signals. The transmission unit 110 includes a function to transmit, for example, NR-PSS, NR-SSS, NR-PBCH, and DL/UL control signals to the terminal 20.

The configuration unit 130 stores, in a storage device, preset setting information and various types of setting information to be transmitted to the terminal 20, and reads the configuration information from the storage device as necessary. The setting information includes, for example, information related to measurement performed by the terminal 20 in the HST environment.

The control unit 140 performs a process of generating configurations for measurement performed by the terminal 20 as described in the embodiments. Also, the control unit 140 controls communications based on a measurement report obtained from the terminal 20. A functional component of the control unit 140 related to signal transmission may be included in the transmission unit 110, and a functional component of the control unit 140 related to signal reception may be included in the reception unit 120.

### <TERMINAL 20>

FIG. 14 is a drawing illustrating an example of a functional configuration of the terminal 20. As illustrated in FIG. 14, the terminal 20 includes a transmission unit 210, a reception unit 220, a configuration unit 230, and a control unit 240. The functional configuration illustrated in FIG. 14 is just an example. As long as operations related to the embodiments of the present invention can be performed, the categorization and the names of the functional components may be freely changed.

The transmission unit 210 generates a transmission signal from transmission data and wirelessly transmits the transmission signal. The reception unit 220 wirelessly receives various types of signals, and obtains upper layer signals from the received physical layer signals. Also, the reception unit 220 includes a function to receive, for example, NR-PSS, NR-SSS, NR-PBCH, and DL/UL/SL control signals transmitted from the base station 10. Also, for example, as D2D communications, the transmission unit 210 transmits, to another terminal 20, a physical sidelink control channel (PSCCH), a physical sidelink shared channel (PSSCH), a physical sidelink discovery channel (PSDCH), and a physical sidelink broadcast channel (PSBCH); and the reception unit 120 receives, for example, PSCCH, PSSCH, PSDCH, and PSBCH from another terminal 20.

The configuration unit 230 stores various types of setting information received from the base station 10 or the terminal 20 by the reception unit 220 in a storage device, and reads the configuration information from the storage device as necessary. The configuration unit 230 also stores preset setting information. The setting information includes, for example, information related to measurement performed by the terminal 20 in the HST environment.

The control unit 240 performs measurement based on measurement configurations obtained from the base station 10 as described in the embodiments. Also, the control unit 240 reports measurement results to the base station 10. A functional component of the control unit 240 related to signal transmission may be included in the transmission unit 210, and a functional component of the control unit 240 related to signal reception may be included in the reception unit 220.

### (HARDWARE CONFIGURATION)

The block diagrams (FIG. 13 and FIG. 14) used in the descriptions of the above embodiments illustrate functional blocks or units. These functional blocks (components) may be implemented by any combination of hardware and/or software components. Also, each functional block may be implemented in any manner. That is, each functional block may be implemented by one device that is physically or logically integrated, or by two or more physically or logically separated devices that are directly or indirectly connected (via lines and/or wirelessly) to each other. Each functional block may also be implemented by combining the one device or the two or more devices with software.

Examples of functions include, but are not limited to, determining, deciding, judging, calculating, computing, processing, deriving, investigating, searching, confirming, receiving, transmitting, outputting, accessing, solving, selecting, adopting, establishing, comparing, assuming, expecting, presuming, broadcasting, notifying, communicating, forwarding, configuring, reconfiguring, allocating, mapping, and assigning. For example, a functional block (or functional component) for transmitting may be referred to as a transmitting unit or a transmission unit. As described above, the functional block may be implemented in any appropriate manner.

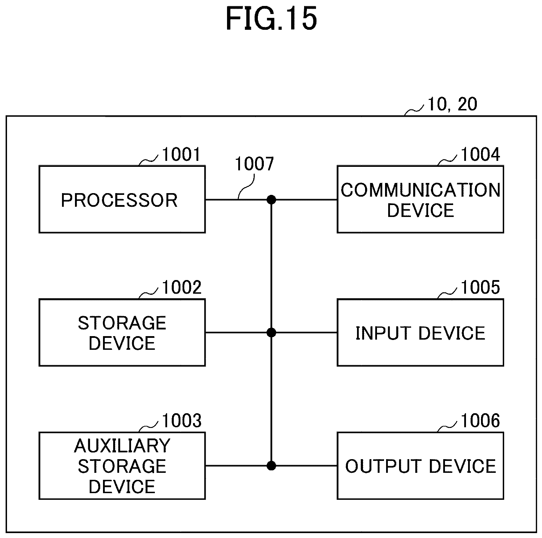

For example, each of the base station 10 and the terminal 20 according to the embodiments of this disclosure may function as a computer that performs a radio communication method of this disclosure. FIG. 15 is a drawing illustrating an example of a hardware configuration of each of the base station 10 and the terminal 20 according to an embodiment of this disclosure. Physically, each of the base station 10 and the terminal 20 may be implemented as a computer including a processor 1001, a storage device 1002, a auxiliary storage device 1003, a communication device 1004, an input device 1005, an output device 1006, and a bus 1007.

In the descriptions below, the term "device" may indicate, for example, a circuit, a device, or a unit. The hardware configuration of each of the base station 10 and the terminal 20 may include one or more sets of each device illustrated in the drawing, or may not include some of the devices.

### [E 1002 and the auxiliary storage device 1003.

The processor 1001 controls the entire computer by running, for example, an operating system. The processor 1001 may be implemented by a central processing unit (CPU) including an interface with a peripheral device, a control device, an arithmetic device, and a register. For example, each of the control unit 140 and the control unit 240 may be implemented by the processor 1001.

The processor 1001 loads programs (program code), software modules, and data from the auxiliary storage device 1003 and/or the communication device 1004 onto the storage device 1002, and performs various processes according to the loaded programs, software modules, and data. The programs cause the computer to perform at least some of the operations described in the above embodiments. For example, the control unit 140 of the base station 10 illustrated in FIG. 13 may be implemented by a control program that is stored in the storage device 1002 and executed by the processor 1001. Also, for example, the control unit 240 of the terminal 20 illustrated in FIG. 14 may be implemented by a control program that is stored in the storage device 1002 and executed by the processor 1001. The processes described above may be performed by one processor 1001 or may be performed concurrently or sequentially by two or more processors 1001. The processor 1001 may be implemented by one or more chips. The programs may be received from a network via a telecommunication line.

The storage device 1002 is a computer-readable storage medium and may be implemented by, for example, at least one of a read-only memory (ROM), an erasable programmable ROM (EPROM), an electrically-erasable programmable ROM (EEPROM), and a random access memory (RAM). The storage device 1002 may also be referred to as a register, a cache, or a main memory. The storage device 1002 can store, for example, programs (program code) and software modules that are executable to perform communication methods according to the embodiments of this disclosure.

The auxiliary storage device 1003 is a computer-readable storage medium and may be implemented by, for example, at least one of an optical disk such as a compact-disk ROM (CD-ROM), a hard disk drive, a flexible disk, a magneto-optical disk (e.g., a compact disk, a digital versatile disk, or a Blu-ray (registered trademark) disk), a smart card, a flash memory (e.g., a card drive, a stick drive, or a key drive), a floppy (registered trademark) disk, and a magnetic strip. The storage medium described above may also be implemented by any other appropriate medium such as a database or a server that includes at least one of the storage device 1002 and the auxiliary storage device 1003.

The communication device 1004 is a hardware component (transceiver device) for communicating with other computers via at least one of a wired network and a wireless network. The communication device 1004 may also be referred to as a network device, a network controller, a network card, or a communication module. The communication device 1004 may include a high-frequency switch, a duplexer, a filter, and a frequency synthesizer to achieve at least one of frequency division duplex (FDD) and time division duplex (TDD). For example, a transmitting and receiving antenna, an amplifier, a transceiver, and a transmission line interface may be implemented by the communication device 1004. The transceiver may be physically or logically separated into a transmission unit and a reception unit.

The input device 1005 receives external inputs and may be implemented by, for example, a keyboard, a mouse, a microphone, switches, buttons, and/or sensors. The output device 1006 is an external output device (e.g., a display, a speaker, and/or an LED lamp). The input device 1005 and the output device 1006 may be implemented as a single component (e.g., a touch panel).

The above-described devices including the processor 1001 and the storage device 1002 are connected to each other via a bus 1007 for communication. The bus 1007 may be implemented by a single bus, or may be implemented by multiple buses connecting the corresponding devices.

Each of the base station 10 and the terminal 20 may include hardware components such as a microprocessor, a digital signal processor (DSP), an application specific integrated circuit (ASIC), a programmable logic device (PLD), and a field programmable gate array (FPGA); and some or all of the functional blocks may be implemented by these hardware components. For example, the processor 1001 may be implemented by at least one of these hardware components.

### (SUMMARY OF EMBODIMENTS)

As described above, the embodiments of the present invention provide a terminal including a reception unit that receives a configuration related to at least one of measurement and reporting from a base station, a control unit that performs the measurement based on the configuration related to at least one of the measurement and the reporting, and a transmission unit that transmits a measurement report to the base station based on a result of the performed measurement. The control unit is configured to limit a period related to the measurement or change the number of times an operation related to the measurement is performed based on whether the terminal is in a specific environment.

The above configuration enables the terminal 20 to perform measurement suitable for the HST environment and to improve its performance. Also, the terminal 20 can change UE operations or network configurations to suit the HST environment. That is, in a radio communication system, a terminal can perform measurement according to an environment.

The control unit may determine whether the terminal is in the specific environment based on a supported moving speed or a required moving speed of the terminal. When limiting the period related to the measurement, the control unit may limit one of a transmission period of a synchronization signal, a transmission period of a reference signal, a measurement period of a secondary cell, and a measurement period for in-sync/out-of-sync determination. When changing the number of times the operation related to the measurement is performed, the control unit may change the number of times the operation related to the measurement is performed based on the period related to the measurement. With this configuration, the terminal 20 can adapt the measurement configurations to the HST environment.

When determining that the terminal is in the specific environment, the control unit may limit the period related to the measurement to a value less than a threshold. With this configuration, the terminal 20 can adapt the measurement configurations to the HST environment.

When the period related to the measurement is a transmission period or a measurement period for in-sync/out-of-sync determination and the terminal is in the specific environment, the control unit may change a threshold of a block error rate for in-sync/out-of-sync determination. With this configuration, the terminal 20 can adapt the measurement configurations to the HST environment.

When determining that the terminal is in the specific environment, the control unit may change the number of beams that need to be simultaneously measured. With this configuration, the terminal 20 can adapt the measurement configurations to the HST environment.

The period related to the measurement may be limited by a threshold that is common to a first RAT and a second RAT in dual connectivity. With this configuration, the terminal 20 can change UE operations for RATs in DC to suit the HST environment.

### <SUPPLEMENTARY DESCRIPTION OF EMBODIMENTS>

Embodiments of the present invention are described above. However, the present invention is not limited to the above-described embodiments, and a person skilled in the art may understand that variations, modifications, and replacements may be made to the above embodiments. Although specific values are used in the above descriptions to facilitate the understanding of the present invention, the values are just examples and other appropriate values may also be used unless otherwise mentioned. Grouping of subject matter in the above descriptions is not essential for the present invention. For example, subject matter described in two or more sections may be combined as necessary, and subject matter described in one section may be applied to subject matter described in another section unless they contradict each other. Boundaries of functional units or processing units in functional block diagrams do not necessarily correspond to boundaries of physical components. Operations of multiple functional units may be performed by one physical component, and an operation of one functional unit may be performed by multiple physical components. The order of steps in processes described in the embodiments may be changed as long as the consistency of the steps is maintained. Although functional block diagrams are used to describe the base station 10 and the terminal 20, each of the base station 10 and the terminal 20 may be implemented by hardware, software, or a combination of them. Each of software to be executed by a processor of the base station 10 according to the embodiments of the present invention and software to be executed by a processor of the terminal 20 according to the embodiments of the present invention may be stored in any appropriate storage medium such as a random access memory (RAM), a flash memory, a read-only memory (ROM), an EPROM, an EEPROM, a register, a hard disk drive (HDD), a removable disk, a CD-ROM, a database, or a server.

Information may also be reported using methods other than those described in this disclosure. For example, information may be reported by physical layer signaling (e.g., downlink control information (DCI) or uplink control information (UCI)), upper layer signaling (e.g., radio resource control (RRC) signaling, medium access control (MAC) signaling, broadcast information (master information block (MIB), or system information block (SIB)), other signals, or a combination of them. Also, RRC signaling may be referred to as an RRC message and may be, for example, an RRC connection setup message or an RRC connection reconfiguration message.

The embodiments described in this disclosure may be applied to at least one of systems employing LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-Wideband), Bluetooth (registered trademark), and any other appropriate system, and a next generation system implemented by extending any one of these systems. Also, the above embodiments may be applied to a combination of multiple systems (e.g., a combination of at least one of LTE and LTE-A and 5G).

The order of steps in sequence charts and flowcharts described in the embodiments of the present application may be changed as long as the consistency of the steps is maintained. For example, the order of steps in each method described in this disclosure is just an example and may be changed to any appropriate order.

Specific operations performed by the base station 10 in the present application may be performed by an upper node of the base station 10. In a network comprised of one or more network nodes including the base station 10, various operations performed for communication with the terminal 20 may be performed by at least one of the base station 10 and a network node (which is, for example, but is not limited to, MME or S-GW) other than the base station 10. In the above example, there is one network node other than the base station 10. However, there may be two or more types of network nodes (e.g., MME and S-GW) other than the base station 10.

Information or signals described in this disclosure may be output from an upper layer (or a lower layer) to the lower layer (or the upper layer), and may be input and output via multiple network nodes.

Input/output information may be stored in a specific location (e.g., in a memory), or may be managed using a management table. Input/output information may be overwritten, updated, or added. Output information may be removed. Input information may be transmitted to another device.

In this disclosure, decision may be made based on a one-bit value (0 or 1) or a truth value (Boolean: true or false), or by comparison of values (e.g., comparison with a predetermined value).

Regardless of whether software is called software, firmware, middleware, a microcode, a hardware description language, or by any other name, software should be interpreted broadly to indicate any of a command, a command set, a code, a code segment, a program code, a program, a subprogram, a software module, an application, a software application, a software package, a routine, a subroutine, an object, an executable file, an execution thread, a procedure, and a function.

Also, software, commands, and information may be transmitted and received via a transmission medium. For example, when software is transmitted from a web site, a server, or any other remote source using a wired technology (e.g., a coaxial cable, a fiber optic cable, a twisted pair, or a digital subscriber line (DSL)) and/or a wireless technology (e.g., infrared rays or microwave), at least one of the wired technology and the wireless technology is within the definition of the transmission medium.

Information and signals described in this disclosure may be represented by using any one of various different technologies. For example, data, instructions, commands, information, signals, bits, symbols, and chips in the above descriptions may be represented by voltages, electric currents, electromagnetic waves, magnetic fields, magnetic particles, optical fields, photons, or any combination of them.

Terms described in this disclosure and terms necessary to understand this disclosure may be replaced with terms having the same or similar meanings. For example, a channel and/or a symbol may be replaced with a signal (signaling). Also, a signal may be replaced with a message. A component carrier (CC) may be referred to as a carrier frequency, a cell, or a frequency carrier.

In this disclosure, the terms "system" and "network" may be used interchangeably.

Also, information and parameters described in this disclosure may be represented by absolute values, may be represented by relative values relative to predetermined values, or may be represented by other types of information. For example, radio resources may be indicated by indices.

The names used for the above-described parameters are not exclusive names. Also, formulas using those parameters are not limited to those explicitly disclosed in this disclosure. Various channels (e.g., PUCCH and PDCCH) and information elements may be identified by any appropriate names. Accordingly, the names assigned to the channels and the information elements do not limit the channels and the information elements in any respect.

In the present application, terms such as "base station (BS)", "radio base station, "base station device", "fixed station", "NodeB", "eNodeB (eNB) " , "gNodeB (gNB)", "access point", "transmission point", "reception point", "transmission/reception point", "cell, ", "sector", "cell group", "carrier", and "component carrier" may be used interchangeably. A base station may also be referred to as a macro cell, a small cell, a femto cell, or a pico cell.

A base station can accommodate one or more (for example, three) cells. When a base station accommodates multiple cells, the entire coverage area of the base station may be divided into multiple smaller areas, and each of the smaller areas may provide a communication service using a base station subsystem (for example, a small indoor base station (RRH: remote radio head). The term "cell" or "sector" refers to a part or the entirety of the coverage area of at least one of the base station and the base station subsystem that provides a communication service in this coverage.

In this disclosure, the terms "mobile station (MS)", "user terminal", "user equipment UE", and "terminal" may be used interchangeably.

Depending on persons skilled in the art, the mobile station may be called by any other appropriate term such as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client.

At least one of the base station and the mobile station may be referred to as a transmission device, a reception device, or a communication device. At least one of the base station and the mobile station may be a device mounted on a mobile body or the mobile body itself. The mobile body may be a vehicle (e.g., automobile or aircraft), an unmanned mobile body (e.g., drone or self-guided vehicle), or a robot (manned or unmanned). At least one of the base station and the mobile station may be a device that does not move during communications. For example, at least one of the base station and the mobile station may be an Internet of Things (IoT) device such as a sensor.

Also, the base station in this disclosure may be replaced with a user terminal. For example, embodiments of this disclosure may be applied to a configuration where communications between the base station and the user terminal are replaced with communications (e.g., device-to-device (D2D) or vehicle-to-Everything (V2X) communications) between multiple terminals 20. In this case, the terminal 20 may have the functions of the base station 10. Also, terms such as "uplink" and "downlink" may be replaced with a term such as "side" used in terminal-to-terminal communications. For example, an uplink channel and a downlink channel may be replaced with side channels.

Similarly, the user terminal in this disclosure may be replaced with a base station. In this case, the base station may have the functions of the user terminal.

In this disclosure, the term "determining" may indicate various operations. For example, "determining" may indicate that one of "judging", "calculating", "computing", "processing", "deriving", "investigating", "looking up (searching, inquiring)" (e.g., searching a data structure such as a table or a database), and "ascertaining" has been performed. Also, "determining" may indicate that one of "receiving" (e.g., reception of information), "transmitting" (e.g., transmission of information), "inputting", "outputting", and "accessing" (e.g., accessing data in a memory) has been performed. Further, "determining" may indicate that one of "resolving", "selecting", "choosing", establishing", and "comparing" has been performed. Thus, "determining" may indicate that an operation has been performed. Also, "determining" may be replaced with a term such as "assuming", "expecting", or "considering".

Terms "connected", "coupled", or variations thereof means any direct or indirect connection or coupling between two or more elements and may include the presence of one or more intermediate elements between two elements which are "connected" or "coupled". The coupling or the connection between the elements may be physical, logical, or a combination thereof. For example, "connecting" may be replaced with "accessing". When used in this disclosure, two elements may be considered to be "connected" or "coupled" with each other using one or more electric wires, cables, and/or a printed electrical connection or using electromagnetic energy having a wavelength in a radio frequency region, a microwave region, or an optical (both visible and invisible) region as non-limiting and non-comprehensive examples.

A reference signal may be abbreviated as RS and may be referred to as a pilot depending on the standard to be applied.

In this disclosure, "based on" does not mean "based only on" unless otherwise mentioned. In other words, "based on" can mean both "based only on" and "based at least on".

In this disclosure, terms such as "first" and "second" used to refer to elements do not generally indicate the quantity or the order of those elements. In this disclosure, such terms may be used to distinguish two or more elements from each other. Accordingly, a first element and a second element do not necessarily indicate that there are only two elements and that the first element needs to come before the second element.

"Units" in each apparatus described above may also be referred to as "parts", "circuits", or "devices".

In this disclosure, similar to the term "comprising", the terms "include" and "including" and variations thereof are open-ended terms. Also, in this disclosure, the term "or" does not indicate exclusive OR.

A radio frame may be comprised of one or more frames in the time domain. In the time domain, one or more frames may be referred to as subframes. Also, a subframe may be comprised of one or more slots in the time domain. A subframe may have a fixed time length (for example, 1 ms) that does not depend on numerology.

Numerology may be a communication parameter applied to at least one of transmission and reception of a signal or a channel. Numerology may indicate, for example, at least one of a subcarrier spacing (SCS), a bandwidth, a symbol length, a cyclic prefix length, a transmission time interval (TTI), a number of symbols per TTI, a radio frame configuration, a specific filtering process performed by a transceiver in the frequency domain, and a specific windowing process performed by a transceiver in the time domain.

A slot may be comprised of one or more symbols (e.g., orthogonal frequency division multiplexing (OFDM) symbols, or single carrier frequency division multiple access (SC-FDMA) symbols) in the time domain. A slot may be a time unit based on numerology.

A slot may include multiple minislots. Each minislot may be comprised of one or more symbols in the time domain. Also, a minislot may be referred to as a "subslot". A minislot may be comprised of a smaller number of symbols than a slot. A PDSCH (or PUSCH) transmitted in a time unit greater than a minislot may be referred to as "PDSCH (or PUSCH) mapping type A". A PDSCH (or PUSCH) transmitted using a minislot may be referred to as "PDSCH (or PUSCH) mapping type B".

Each of a radio frame, a subframe, a slot, a minislot, and a symbol indicates a time unit in transmitting a signal. Each of a radio frame, a subframe, a slot, a minislot, and a symbol may be referred to by a different name.

For example, one subframe may be referred to as a transmission time interval (TTI), multiple consecutive subframes may be referred to as a TTI, and one slot or one minislot may be referred to as a TTI. That is, at least one of a subframe and a TTI may correspond to a subframe (1 ms) in the existing LTE, a period shorter than 1 ms (e.g., 1 through 13 symbols), or a period longer than 1 ms. A unit representing a TTI may be referred to as a slot or a minislot, instead of a subframe.

Here, a TTI may indicate, for example, the minimum time unit of scheduling in radio communications. For example, in the LTE system, the base station performs scheduling by allocating radio resources (e.g., a frequency bandwidth and transmission power available for each terminal 20) to each terminal 20 in units of TTIs. The definition of TTI is not limited to this example.

For example, TTI may be used as a transmission time unit for a channel-encoded data packet (transport block), a code block, or a code word; or used as a processing unit for scheduling or link adaptation. When a TTI is allocated, a time period (e.g., the number of symbols) to which, for example, a transport block, a code block, or a code word is actually mapped may be shorter than the TTI.

When one slot or one minislot is referred to as a TTI, one or more TTIs (i.e., one or more slots or one or more minislots) may be used as the minimum time unit of scheduling. Also, the number of slots (or the number of minislots) constituting the minimum time unit of scheduling may be controlled.

A TTI having a time length of 1 ms may be referred to, for example, as a general TTI (TTI in LTE Rel. 8-12), a normal TTI, a long TTI, a general subframe, a normal subframe, a long subframe, or a slot. A TTI shorter than the general TTI may be referred to, for example, as a shortened TTI, a short TTI, a partial or fractional TTI, a shortened subframe, a short subframe, a minislot, a subslot, or a slot.

A long TTI (e.g., a general TTI or a subframe) may be referred to as a TTI having a time length greater than 1 ms, and a short TTI (e.g., a shortened TTI) may be referred to as a TTI having a TTI length that is less than the TTI length of the long TTI and greater than or equal to 1 ms.

A resource block (RB) is a resource allocation unit in the time domain and the frequency domain, and may include one or more consecutive subcarriers in the frequency domain. A RB may include the same number of subcarriers, e.g., 12, regardless of numerology. Alternatively, the number of subcarriers included in a RB may be determined based on numerology.

Also, in the time domain, a RB may include one or more symbols, and may have a length of one slot, one minislot, one subframe, or one TTI. Each of one TTI and one subframe may be comprised of one or more resource blocks.

One or more RBs may be referred to as a physical resource block (PRB), a subcarrier group (SCG), a resource element group (REG), a PRB pair, or an RB pair.

Also, a resource block may be comprised of one or more resource elements (RE). For example, one RE may be a radio resource region consisting of one subcarrier and one symbol.

A bandwidth part (BWP) (which may also be referred to as a partial bandwidth) may indicate a subset of consecutive common resource blocks (RB) for a numerology in a carrier. Here, the common RB may be identified by an RB index relative to a common reference point of the carrier. A PRB may be defined by a BWP and numbered within the BWP.

A BWP may include an uplink BWP (UL BWP) and a downlink BWP (DL BWP). For UE, one or more BWPs may be defined in one carrier.

At least one of the defined BWPs may be active, and the UE may not need to consider transmitting and receiving a predetermined signal/channel outside of the active BWP. A "cell" or a "carrier" in this disclosure may be referred to as a "BWP".

The above-described configurations of a radio frame, a subframe, a slot, a minislot, and a symbol are just examples. For example, the number of subframes in a radio frame, the number of slots per subframe or radio frame, the number of minislots in a slot, the numbers of symbols and RBs in a slot or a minislot, the number of subcarriers in a RB, the number of symbols in a TTI, a symbol length, and a cyclic prefix (CP) length may be changed in various manners.

When an article "a", "an", or "the" is attached to a noun in an English translation of this disclosure, the noun following the article may indicate plural elements.

In this disclosure, "A and B differ" may indicate that "A and B differ from each other" or "A and B differ from C". This also applies to terms such as "separate" and "coupled".

The embodiments described in this disclosure may be used separately or in any combination, and may also be switched during a process. Predetermined information (e.g., "A is X") may be reported explicitly or implicitly (e.g., by not reporting the predetermined information).

In this disclosure, a measurement configuration is an example of a measurement setting. A measurement report is an example of a report of a measurement. A measurement gap (MG) is an example of a measurement gap. A BLER is an example of a block error rate.

The embodiments of this disclosure are described above in detail. However, it is obvious to a person skilled in the art that this disclosure is not limited to the above-described embodiments. Variations and modifications may be made to the embodiments without departing from the scope of this disclosure defined by the claims. Thus, the above-described embodiments are examples and are not intended to limit the present invention.

### EXPLANATION OF REFERENCE NUMERALS

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device

## Claims

1. A terminal, comprising:
a reception unit that receives, from a base station, a configuration related to at least one of measurement and reporting;
a control unit that performs the measurement based on the configuration related to the at least one of the measurement and the reporting; and
a transmission unit that transmits a measurement report to the base station based on a result of the performed measurement,
wherein the control unit limits a period related to the measurement or changes a number of times an operation related to the measurement is performed based on whether the terminal is in a specific environment.

2. The terminal as claimed in claim 1, wherein the control unit
determines whether the terminal is in the specific environment based on a supported moving speed or a required moving speed of the terminal,
limits one of a transmission period of a synchronization signal, a transmission period of a reference signal, a measurement period of a secondary cell, and a measurement period for in-sync/out-of-sync determination, when limiting the period related to the measurement; and
changes the number of times the operation related to the measurement is performed based on the period related to the measurement, when changing the number of times the operation related to the measurement is performed.

3. The terminal as claimed in claim 2,
wherein the control unit limits the period related to the measurement to a value less than a threshold, when determining that the terminal is in the specific environment.

4. The terminal as claimed in claim 2, wherein the control unit changes a threshold of a block error rate for the in-sync/out-of-sync determination, when: the period related to the measurement is a transmission period or the measurement period for the in-sync/out-of-sync determination; and the terminal is in the specific environment.

5. The terminal as claimed in claim 2, wherein the control unit changes a number of beams that need to be simultaneously measured when determining that the terminal is in the specific environment.

6. The terminal as claimed in claim 2, wherein the period related to the measurement is limited by a threshold that is common to a first RAT and a second RAT in dual connectivity.
